# EUROPEAN PATENT APPLICATION

(11) **EP 2 711 070 A1**
(43) Date of publication of application: **26.03.2014**
(21) Application number: 12785501.3
(22) Date of filing: 10.05.2012
(51) Int. Cl.: B01D 63/00, B01D 63/06

(54) **ATTACHMENT DEVICE FOR SEPARATION FILM ELEMENT IN SEPARATION FILM MODULE**

(30) Priority: 17.05.2011 JP 2011110056
(71) Applicant: Hitachi Zosen Corporation, Osaka-shi, Osaka 559-8559 (JP)
(72) Inventor: FUJITA, Suguru, Osaka-shi, Osaka 559-8559 (JP); TAKAKI, Yoshinobu, Osaka-shi, Osaka 559-8559 (JP); ASARI, Yoshihiro, Osaka-shi, Osaka 559-8559 (JP)
(74) Representative: Albrecht, Ralf
(86) International application number: PCT/JP2012/062032
(87) International publication number: WO 2012/157526

(57) **Abstract**

To provide a device for mounting a separation membrane element in a separation membrane module which can enhance the operability of a maintenance operation, exhibits excellent resistance under various use conditions, and is advantageous in terms of cost. In the device for mounting a separation membrane element 3 in a separation membrane module 1, a sealing member is constituted of a plurality of notched circular packings 7 made of graphite, for example, each having a notched circular shape as viewed in a plan view. The plurality of notched circular packings 7 are fitted on an upper end portion 3a of the separation membrane element 3 in a state where the notched circular packings 7 are made to overlap with each other in plural stages, notched portions 8, 8 of the notched circular packings 7a, 7b arranged adjacent to each other vertically are arranged at positions different from each other as viewed in a plan view, the notched circular packings 7 in plural stages are received by the inwardly projecting annular receiving portion 12 in the mounting hole 11, the notched circular packings 7 in plural stages are pressed to the annular receiving portion 12 by threaded engagement of the press fitting 20 thus applying sealing.

## Description

### Technical Field

The present invention relates to a device for mounting a separation membrane element in a separation membrane module used in the separation of a fluid such as a mixed gas or a solution, and more particularly to the structure for mounting and sealing a separation membrane element. To be more specific, a device for mounting a separation membrane element of the present invention is applicable to a separation membrane module which separates a fluid by using a zeolite separation membrane such as the separation of various gases or the dehydration of a solvent system.

### Background Art

Conventionally, as a device for separating a component in a mixed gas or a solution, a separation membrane module has been known. As a tubular separation membrane element mounted on the separation membrane module, in general, there has been used an integral-type tubular inorganic separation membrane element where a tubular separation membrane element body is formed by coating a zeolite thin film having minute holes having a size of a molecule on a tubular ceramic porous base substrate made of a material such as alumina or zirconia, a connecting tube made of dense ceramic is joined to one end of the separation element membrane element body, and a sealing plug made of dense ceramic is joined to the other end of the separation membrane element body.

As a prior art relating to the mounting structure for assembling such a tubular separation membrane element into a separation membrane module, as described in the following patent literature 1, there have been known the structure where an O-ring made of a material such as a fluororubber system is fitted on an upper end portion of the tubular separation membrane element, the O-ring is crushed from above by the thread engagement of a press fitting thus filling a sealing space with the O-ring and the structure where the sealing is performed by making use of the difference in pressure which is generated at the time of actual operation ("so-called" omnibus seal made of a Teflon (registered trademark)-based material).

Further, as described in the following patent literature 2, there has been also known the structure where sealing is performed in such a manner that a metal ring is fitted on an upper end portion of a tubular separation membrane element and a sealing member is held on the metal ring by way of a grand packing and a thermal expansion mat.

Further, as described in the following patent literature 3, there has been also known the structure where sealing is performed in such a manner that a metal-made seal ring having a trapezoidal transverse cross-sectional shape on an upper end portion of a tubular separation membrane element, and a ring having a trapezoidal transverse cross-sectional shape is pressed to a tapered receiving portion thus bringing the ring into close contact with a surface to be sealed.

### Citation List

### Patent Literature

PTL 1: JP-A-2009-226374
PTL 2: JP-UM-B-6-25760
PTL 3: JP-A-2011-72972

### Summary of Invention

### Technical Problem

However, according to the conventional method which uses the O-ring described in the above-mentioned patent literature 1, the O-ring is made of a soft material such as fluororubber and hence, the O-ring is easily deformed by pressing at the time of sealing. Accordingly, a space to be sealed is liable to be filled with the O-ring. Although the sealing property is reliably ensured, this method has a drawback that the use of the method under high-temperature and high-pressure environment is limited or a medium to be handled in the method is limited so that the use of the method is limited to a neutral solvent system or the like as the application.

Further, according to the conventional method which uses the sealing member having the so-called omnibus seal structure described in the above-mentioned patent literature 1, the sealing member is made of a Teflon (registered trademark)-based material and hence, this method also has a drawback the method is limited with respect to the use temperature and the use pressure. Further, it is inevitable for the method to adopt the structure where a gap is small in size and hence, the mounting operation of the tubular separation membrane element relatively requires a time and efforts.

According to the conventional method which uses the grand packing clamped by the metal ring described in the above-mentioned patent literature 2, the tubular separation membrane element is mounted on a tube plate after mounting the tubular separation membrane element on the metal ring using thermal expansion mat besides the grand packing and hence, the number of parts to be added is extremely large whereby a mounting pitch of the tubular separation membrane elements becomes large inevitably thus giving rise to a drawback that possibility of lowering a volume efficiency as a separation membrane module is high.

According to the conventional method which uses the metal seal ring having a trapezoidal shape described in the above-mentioned patent literature 3, from a viewpoint of the structure of the seal ring, the seal ring made of copper, aluminum or the like which has a small Young's modulus (that is, being liable to be deformed) is applicable to the method. However, this method which uses copper or aluminum has a drawback that mediums (fluids) which can be handled in the method is limited.

For example, when the metal seal ring has a Young's modulus at a level of stainless steel which is the same material for forming the separation membrane module, there arises a drawback that the actual realization of the seal structure of a separation membrane element in a separation membrane module used for the separation of a mixed gas, a solution or the like is difficult.

It is an object of the present invention to provide a device for mounting a separation membrane element in a separation membrane module which can overcome the above-mentioned drawbacks of the prior art, facilitates an operation of mounting the separation membrane element on a tube plate of the separation membrane module by way of a sealing member or a maintenance operation such as the replacement of the separation membrane element, exhibits excellent resistance under various use conditions, and is also advantageous in terms of cost.

### Solution to Problem

To achieve the above-mentioned object, the invention on a device for mounting a separation membrane element in a separation membrane module called for in claim 1 is characterized in that, in a separation membrane module (1) where the separation membrane module (1) includes a casing (2) having a tube plate (10), a plurality of tubular separation membrane elements (3) which are mounted on the tube plate (10) in a suspended manner and parallel to each other, and a press fitting (20) for fixing the respective tubular separation membrane elements (3) to the tube plate (10) with a sealing member sandwiched therebetween, a mounting hole (11) is formed in a separation membrane element (3) mounting portion of the tube plate (10) in a penetrating manner, an inwardly projecting annular receiving portion (12) is formed on a lower portion of an inner peripheral surface of the mounting hole (11), a female threaded portion (14) is formed on an upper portion of the inner peripheral surface of the mounting hole (11), the press fitting (20) is constituted of a top wall (21) having a gas passing hole (23) and a cylindrical downwardly extending wall (22) which is contiguously formed with an outer peripheral portion of the top wall (21), and a male threaded portion (24) is formed on an outer peripheral surface of the cylindrical downwardly extending wall (22), the sealing member is constituted of a plurality of notched circular packings (7) each having a notched circular shape as viewed in a plan view, an upper end portion (3a) of the separation membrane element (3) is made to pass through the mounting hole (11) formed in the tube plate (10), the plurality of notched circular packings (7) are fitted on an outer peripheral surface of the upper end portion (3a) of the separation membrane element (3) in the inside of the mounting hole (11) in a state where the notched circular packings (7) are made to overlap with each other in plural stages, notched portions (8), (8) of the notched circular packings (7a), (7b) arranged adjacent to each other vertically are arranged at positions different from each other as viewed in a plan view, the notched circular packings (7) are received by the inwardly projecting annular receiving portion (12) formed on the lower portion of the inner peripheral surface of the mounting hole (11) formed in the tube plate, the cylindrical downwardly extending wall (22) of the press fitting (20) is fitted in the mounting hole (11) formed in the tube plate (10), the male threaded portion (24) formed on the press fitting (20) is threadedly engaged with the female threaded portion (14) formed on the mounting hole (11), the notched circular packings (7) in plural stages are pressed to the annular receiving portion (12) formed on the lower portion of the peripheral surface of the mounting hole (11) by a distal end portion of the cylindrical downwardly extending wall (22) of the press fitting (20), and sealing is applied between the inner peripheral surface of the mounting hole (11) and the outer peripheral surface of the upper end portion (3a) of the separation membrane element (3) by means of the notched circular packings (7).

In the above-mentioned device for mounting a separation membrane element in a separation membrane module called for in claim 1, the notched circular packing (7) is preferably made of graphite.

The invention on a device for mounting a separation membrane element in a separation membrane module called for in claim 3 is characterized in that, in a separation membrane module (1) where the separation membrane module (1) includes a casing (2) having a tube plate (10), a plurality of tubular separation membrane elements (3) which are mounted on the tube plate (10) in a suspended manner and parallel to each other, and a press fitting (20) for fixing the respective tubular separation membrane elements (3) to the tube plate (10) with a sealing member sandwiched therebetween, a mounting hole (11) is formed in a separation membrane element (3) mounting portion of the tube plate (10) in a penetrating manner, an inwardly projecting annular receiving portion (12) is formed on a lower portion of an inner peripheral surface of the mounting hole (11), a female threaded portion (14) is formed on an upper portion of the inner peripheral surface of the mounting hole (11), the press fitting (20) is constituted of a top wall having a gas passing hole and a cylindrical downwardly extending wall (22) which is contiguously formed with an outer peripheral portion of the top wall, and a male threaded portion (24) is formed on an outer peripheral surface of the cylindrical downwardly extending wall (22), the sealing member is formed of a ring-shaped packing (9) made of a thin metal plate having a U-shaped transverse cross section which opens upward, a tapered surface (13) which is gradually tapered downward is formed on an annular receiving portion (12) formed on a lower portion of the inner peripheral surface of the mounting hole (11) formed in the tube plate (10), a thin-wall distal end portion (25) is formed on a lower end of the cylindrical downwardly extending wall (22) of the press fitting (20), the thin-wall distal end portion (25) has a thickness which allows the thin-wall distal end portion (25) to be fitted in a gap formed between an inner peripheral surface of the receiving portion (12) below the tapered surface (13) formed on the annular receiving portion (12) and an outer peripheral surface of an upper end portion (3a) of the tubular separation membrane element (3), the upper end portion (3a) of the separation membrane element (3) is made to pass through the mounting hole (11) formed in the tube plate (10), the ring-shaped packing (9) made of a thin metal plate having a U-shaped transverse cross section is fitted on an outer peripheral surface of the upper end portion (3a) of the separation membrane element (3) in the inside of the mounting hole (11) in a state where an opening portion (9a) of the ring-shaped packing (9) is directed upward, the ring-shaped packing (9) made of a thin metal plate having a U-shaped transverse cross section is received by the inwardly projecting annular receiving portion (12) formed on the lower portion of the inner peripheral surface of the mounting hole (11) formed in the tube plate, the cylindrical downwardly extending wall (22) of the press fitting (20) is fitted in the mounting hole (11) formed in the tube plate (10), the male threaded portion (24) formed on the press fitting (20) is threadedly engaged with the female threaded portion (14) formed on the mounting hole (11), the thin-wall distal end portion (25) formed on the cylindrical downwardly extending wall (22) of the press fitting (20) is fitted in the upwardly opening portion (9a) of the ring-shaped packing (9) having a U-shaped transverse cross section from above, and the ring-shaped packing (9) made of a thin metal plate having a U-shaped transverse cross section is pressed from above by the thin-wall distal end portion (25) so that the ring-shaped packing (9) made of a thin metal plate is deformed in conformity with an outer surface of the thin-wall distal end portion (25) of the press fitting (20) whereby sealing is applied between the tapered surface (13) formed on the annular receiving portion (12) and the inner peripheral surface of the receiving portion (12) below the tapered surface (13) and the outer peripheral surface of the upper end portion (3a) of the tubular separation membrane element (3) by means of the deformed ring-shaped packing (9) made of a thin metal plate and the thin-wall distal end portion (25) of the press fitting (20).

In the above-mentioned device for mounting a separation membrane element in a separation membrane module called for in claim 3, the ring-shaped packing (9) made of a thin metal plate having a U-shaped transverse cross section which opens upward is preferably made of stainless steel.

### Advantageous Effects of Invention

The invention on the device for mounting a separation membrane element in a separation membrane module called for in claim 1 is characterized in that, in a separation membrane module (1) where the separation membrane module (1) includes a casing (2) having a tube plate (10), a plurality of tubular separation membrane elements (3) which are mounted on the tube plate (10) in a suspended manner and parallel to each other, and a press fitting (20) for fixing the respective tubular separation membrane elements (3) to the tube plate (10) with a sealing member sandwiched therebetween, a mounting hole (11) is formed in a separation membrane element mounting portion of the tube plate (10) in a penetrating manner, an inwardly projecting annular receiving portion (12) is formed on a lower portion of an inner peripheral surface of the mounting hole (11), a female threaded portion (14) is formed on an upper portion of the inner peripheral surface of the mounting hole (11), the press fitting (20) is constituted of a top wall (21) having a gas passing hole (23) and a cylindrical downwardly extending wall (22) which is contiguously formed with an outer peripheral portion of the top wall (21), and a male threaded portion (24) is formed on an outer peripheral surface of the cylindrical downwardly extending wall (22), the sealing member is constituted of a plurality of notched circular packings (7) each having a notched circular shape as viewed in a plan view, an upper end portion (3a) of the separation membrane element (3) is made to pass through the mounting hole (11) formed in the tube plate (10), the plurality of notched circular packings (7) are fitted on an outer peripheral surface of the upper end portion (3a) of the separation membrane element (3) in the inside of the mounting hole (11) in a state where the notched circular packings (7) are made to overlap with each other in plural stages, notched portions (8), (8) of the notched circular packings (7a), (7b) arranged adjacent to each other vertically are arranged at positions different from each other as viewed in a plan view, the notched circular packings (7) are received by the inwardly projecting annular receiving portion (12) formed on the lower portion of the inner peripheral surface of the mounting hole (11) formed in the tube plate, the cylindrical downwardly extending wall (22) of the press fitting (20) is fitted in the mounting hole (11) formed in the tube plate (10), the male threaded portion (24) formed on the press fitting (20) is threadedly engaged with the female threaded portion (14) formed on the mounting hole (11), the notched circular packings (7) in plural stages are pressed to the annular receiving portion (12) formed on the lower portion of the peripheral surface of the mounting hole (11) by a distal end portion of the cylindrical downwardly extending wall (22) of the press fitting (20), and sealing is applied between the inner peripheral surface of the mounting hole (11) and the outer peripheral surface of the upper end portion (3a) of the separation membrane element (3) by means of the notched circular packings (7).

According to the invention called for in claim 1, the following advantages are acquired. That is, the operability of an operation of mounting the separation membrane element on the tube plate of the separation membrane module with the sealing member sandwiched therebetween or a maintenance operation such as the replacement of the separation membrane element is enhanced. Further, the device exhibits excellent resistance under various use conditions. The device is also advantageous in terms of cost.

In the above-mentioned device for mounting a separation membrane element in a separation membrane module called for in claim 1, the notched circular packing (7) is preferably made of graphite.

The invention on a device for mounting a separation membrane element in a separation membrane module called for in claim 3 is characterized in that, in a separation membrane module (1) where the separation membrane module (1) includes a casing (2) having a tube plate (10), a plurality of tubular separation membrane elements (3) which are mounted on the tube plate (10) in a suspended manner and parallel to each other, and a press fitting (20) for fixing the respective tubular separation membrane elements (3) to the tube plate (10) with a sealing member sandwiched therebetween, a mounting hole (11) is formed in a separation membrane element (3) mounting portion of the tube plate (10) in a penetrating manner, an inwardly projecting annular receiving portion (12) is formed on a lower portion of an inner peripheral surface of the mounting hole (11), a female threaded portion (14) is formed on an upper portion of the inner peripheral surface of the mounting hole (11), the press fitting (20) is constituted of a top wall having a gas passing hole and a cylindrical downwardly extending wall (22) which is contiguously formed with an outer peripheral portion of the top wall, and a male threaded portion (24) is formed on an outer peripheral surface of the cylindrical downwardly extending wall (22), the sealing member is formed of a ring-shaped packing (9) made of a thin metal plate having a U-shaped transverse cross section which opens upward, a tapered surface (13) which is gradually tapered downward is formed on an annular receiving portion (12) formed on a lower portion of the inner peripheral surface of the mounting hole (11) formed in the tube plate (10), a thin-wall distal end portion (25) is formed on a lower end of the cylindrical downwardly extending wall (22) of the press fitting (20), the thin-wall distal end portion (25) has a thickness which allows the thin-wall distal end portion (25) to be fitted in a gap formed between an inner peripheral surface of the receiving portion (12) below the tapered surface (13) formed on the annular receiving portion (12) and an outer peripheral surface of an upper end portion (3a) of the tubular separation membrane element (3), the upper end portion (3a) of the separation membrane element (3) is made to pass through the mounting hole (11) formed in the tube plate (10), the ring-shaped packing (9) made of a thin metal plate having a U-shaped transverse cross section is fitted on an outer peripheral surface of the upper end portion (3a) of the separation membrane element (3) in the inside of the mounting hole (11) in a state where an opening portion (9a) of the ring-shaped packing (9) is directed upward, the ring-shaped packing (9) made of a thin metal plate having a U-shaped transverse cross section is received by the inwardly projecting annular receiving portion (12) formed on the lower portion of the inner peripheral surface of the mounting hole (11) formed in the tube plate, the cylindrical downwardly extending wall (22) of the press fitting (20) is fitted in the mounting hole (11) formed in the tube plate (10), the male threaded portion (24) formed on the press fitting (20) is threadedly engaged with the female threaded portion (14) formed on the mounting hole (11), the thin-wall distal end portion (25) formed on the cylindrical downwardly extending wall (22) of the press fitting (20) is fitted in the upwardly opening portion (9a) of the ring-shaped packing (9) having a U-shaped transverse cross section from above, and the ring-shaped packing (9) made of a thin metal plate having a U-shaped transverse cross section is pressed from above by the thin-wall distal end portion (25) so that the ring-shaped packing (9) made of a thin metal plate is deformed in conformity with an outer surface of the thin-wall distal end portion (25) of the press fitting (20) whereby sealing is applied between the tapered surface (13) formed on the annular receiving portion (12) and the inner peripheral surface of the receiving portion (12) below the tapered surface (13) and the outer peripheral surface of the upper end portion (3a) of the tubular separation membrane element (3) by means of the deformed ring-shaped packing (9) made of a thin metal plate and the thin-wall distal end portion (25) of the press fitting (20).

According to the invention called for in claim 3, the following advantages are acquired. That is, the operability of an operation of mounting the separation membrane element on the tube plate of the separation membrane module with the sealing member sandwiched therebetween or a maintenance operation such as the replacement of the separation membrane element is enhanced. Further, the device exhibits excellent resistance under various use conditions. The device is also advantageous in terms of cost.

In the above-mentioned device for mounting a separation membrane element in a separation membrane module called for in claim 3, the ring-shaped packing (9) made of a thin metal plate having a U-shaped transverse cross section which opens upward is preferably made of stainless steel.

### Brief Description of Drawings

[Fig. 1] Fig. 1 is a longitudinal cross-sectional view showing one example of a separation membrane element.
[Fig. 2] Fig. 2 is a longitudinal cross-sectional view showing one example of a separation membrane module.
[Fig. 3] Fig. 3 is an enlarged cross-sectional view showing a first embodiment of a device for mounting a separation membrane element according to the present invention.
[Fig. 4] Fig. 4 is an enlarged perspective view of a notched circular packing used in the device for mounting a separation membrane element shown in Fig. 3.
[Fig. 5] Fig. 5 is an enlarged cross-sectional view showing a second embodiment of a device for mounting a separation membrane element according to the present invention, wherein a state where a ring-shaped packing made of a thin metal plate is mounted on an upper end portion of a tubular separation membrane element is shown.
[Fig. 6] Fig. 6 is an enlarged perspective view with a part broken away of the ring-shaped packing made of a thin metal plate used in the device for mounting a separation membrane element shown in Fig. 5.
[Fig. 7] Fig. 7 is an enlarged cross-sectional view of the device for mounting a separation membrane element according to the present invention shown in Fig. 5, wherein a sealing state where the ring-shaped packing made of a thin metal plate is deformed due to the threaded engagement of a press fitting which is fitted on an upper end portion of the tubular separation membrane element is shown.

### Reference Signs List

1: separation membrane module
3: tubular separation membrane element
3a: upper end portion
4: separation membrane element body
7: notched circular packing
7a: notched circular packing
7b: notched circular packing
8: notched portion
9: ring-shaped packing made of thin metal plate
9a: upwardly opening portion
10: tube plate
11: mounting hole
12: inwardly projecting annular receiving portion
13: tapered surface
14: female threaded portion
20: press fitting
22: cylindrical downwardly extending wall
24: male threaded portion
25: thin-wall distal end portion

### Description of Embodiments

Next, embodiments of the present invention are explained by reference to drawings. However, the present invention is not limited to these embodiments.

The device for mounting a separation membrane element according to the present invention is applicable to a separation membrane module which separates a fluid by using a zeolite separation membrane such as the separation of various gases or the dehydration of a solvent system.

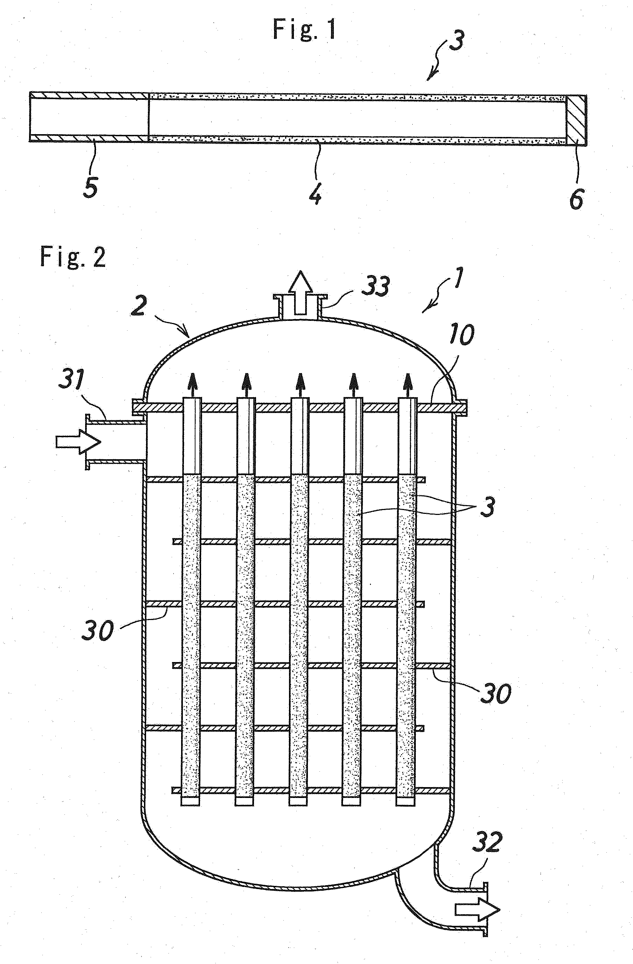

Fig. 1 is a longitudinal cross-sectional view showing one example of a tubular separation membrane element (3). Fig. 2 is a longitudinal cross-sectional view showing one example of a separation membrane module (1) which includes the tubular separation membrane elements (3) shown in Fig. 1.

Firstly, in Fig. 1, the tubular separation membrane element (3) is formed of: a tubular separation membrane element body (4) which is formed by coating a zeolite thin film having minute holes having a size of a molecule on a tubular ceramic porous base substrate formed using a material such as alumina or zirconia; a connecting tube (5) made of dense ceramic which is joined to one end of the separation membrane element body (4); and a sealing plug (6) made of dense ceramic which is joined to the other end of the separation membrane element body (4). As the tubular separation membrane element (3), an integral-type inorganic tubular separation membrane element is used.

Next, as shown in Fig. 2, the separation membrane module (1) is configured such that a horizontal tube plate (10) is arranged in a casing (2) near a top wall, and a desired number of tubular separation membrane elements (3) shown in Fig. 1 are mounted on the tube plate (10) in a suspended manner and parallel to each other. In the inside of the casing (2) and below tube plate (10), a desired number of baffle plates (30) are arranged parallel to the tube plate (10). The number of baffle plates (30) to be mounted is usually 2 to 30 although it depends on the size of the casing (2). A plurality of opening portions are formed in each baffle plate (30), and the tubular separation membrane elements (3) pass through these opening portions in a penetrating manner. The baffle plates (30) are air-tightly engaged with an inner surface of the casing (2).

An inlet (31) for fluid to be treated is formed in an upper portion of a barrel wall of the casing (2), an outlet (32) for treated fluid is formed in a bottom wall of the casing (2), and a permeated gas discharge port (33) is formed in a center portion of the top wall of the casing (2). The arrangement of the inlet (31) for fluid to be treated and the outlet (32) for treated fluid is not limited to the arrangement in the above-mentioned embodiment, and the arrangement of the inlet (31) for fluid to be treated and the outlet (32) for treated fluid may be reversed.

For example, when a fluid mixture of hydrogen (H₂) and carbon dioxide (CO₂) is separated into these gases using the above-mentioned multi-tubular type separation membrane module (1), the fluid mixture formed of hydrogen (H₂) and carbon dioxide (CO₂) is supplied to the inside of the casing (2) through the inlet (31) for fluid to be treated. The fluid mixture passes through the inside of the casing (2) such that the fluid mixture meanders through gaps formed between the baffle plates (30) and gaps formed between the tubular zeolite membrane elements (3) in a zigzag manner as viewed in a front elevation view. Carbon dioxide (CO₂) which permeates the respective tubular membrane elements (3) is discharged from the permeated gas discharge port (33), and hydrogen (H₂) which is a non-permeable fluid passes through gaps formed between the baffle plates (30) and the tubular membrane elements (3) as well as gaps formed between the tubular membrane elements (3), and is eventually discharged from the discharge port (32).

The structure of the separation membrane module (1) is not limited to the structure of the above-mentioned embodiment, and the separation membrane module (1) may adopt the double-tube structure where a tubular separation membrane element (3) and an outer tube (not shown in the drawing) which surrounds the tubular separation membrane element (3) make a pair.

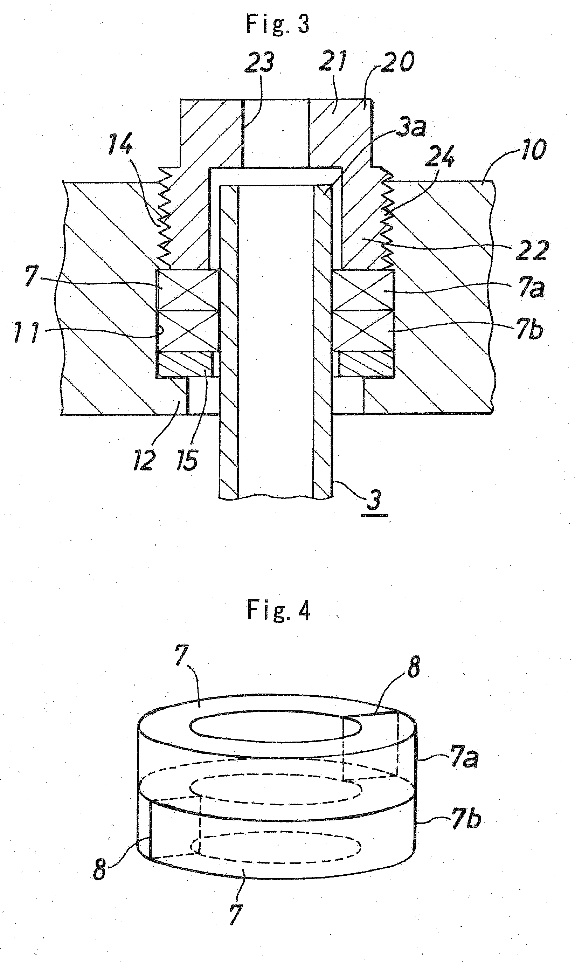

Fig. 3 is an enlarged cross-sectional view showing a first embodiment of the device for mounting a separation membrane element according to the present invention, and Fig. 4 is an enlarged perspective view of a notched circular packing (7) used in the device for mounting a separation membrane element shown in Fig. 3.

In the drawings, the separation membrane module (1) includes: a casing (2) having a tube plate (10); a plurality of tubular separation membrane elements (3) which are mounted on the tube plate (10) in a suspended manner and parallel to each other; and press fittings (20) for fixing the respective tubular separation membrane elements (3) to the tube plate (10) with sealing members sandwiched therebetween.

Mounting holes (11) are formed in separation membrane element (3) mounting portions of the tube plate (10) in a penetrating manner, an inwardly projecting annular receiving portion (12) is formed on a lower portion of an inner peripheral surface of each mounting hole (11), and a female threaded portion (14) is formed on an upper portion of the inner peripheral surface of each mounting hole (11).

The press fitting (20) is constituted of a top wall (21) having a gas passing hole (23) and a cylindrical downwardly extending wall (22) which is contiguously formed with an outer peripheral portion of the top wall (21), and a male threaded portion (24) is formed on an outer peripheral surface of the cylindrical downwardly extending wall (22).

An upper end portion (3a) of the separation membrane element (3) is made to pass through the mounting hole (11) formed in the tube plate (10) of the separation membrane module (1), the plurality of notched circular packings (7) are fitted on an outer peripheral surface of the upper end portion (3a) of the separation membrane element (3) in the inside of the mounting hole (11) in a state where the notched circular packings (7) overlap with each other in plural stages, notched portions (8),(8) of the notched circular packings (7a), (7b) arranged adjacent to each other vertically are arranged at positions different from each other as viewed in a plan view, the notched circular packings (7) are received by the inwardly projecting annular receiving portion (12) formed on the lower portion of the inner peripheral surface of the mounting hole (11) formed in the tube plate by way of a receiving ring (15) made of metal in this embodiment, and the cylindrical downwardly extending wall (22) of the press fitting (20) is fitted in the mounting hole (11) formed in the tube plate (10).

By using the receiving ring (15) made of metal according to this embodiment as a member which receives the notched circular packing (7), after the separation membrane element (3) is inserted into the mounting hole (11), the notched circular packing (7) can be set together with the receiving ring (15) made of metal. As a result, in performing the operation of mounting the separation membrane element (3), it is possible to provide a state where the insertion of the separation membrane element (3) is facilitated.

The male threaded portion (24) formed on the press fitting (20) is threadedly engaged with the female threaded portion (14) formed on the mounting hole (11) formed in the tube plate (10) so that the plurality of notched circular packings (7) are pressed to the annular receiving portion (12) formed on the lower portion of the peripheral surface of the mounting hole (11) by a distal end portion of the cylindrical downwardly extending wall (22) of the press fitting (20) whereby sealing is applied between the inner peripheral surface of the mounting hole (11) and the outer peripheral surface of the upper end portion (3a) of the separation membrane element (3) by means of the notched circular packings (7).

In this embodiment, firstly, the notched circular packing (7) having a notched circular shape as viewed in a plan view is preferably made of graphite from a viewpoint of a material. That is, graphite exhibits resistance widely against the use thereof under a high temperature and high pressure environment and against various kinds of mediums such as an acid or alkali. Further, the notched circular packing (7) made of graphite can be easily purchased as a ring-shaped formed product in general.

The notched circular packing (7) made of graphite is a formed product, and is manufactured by a method where bar-shaped graphite is formed into a ring shape. The notched circular packing (7) is not formed into a complete ring shape thus having a notched portion (slit) (8).

Accordingly, the notched circular packings (7) made of graphite are made to overlap in two stages or more, preferably in three stages or more and, in overlapping the notched circular packings (7) to each other, the rotation of the notched circular packings (7) is taken into consideration such that the notched portions (slit) (8) are not overlapped with each other. For example, when the notched circular packings (7) are made to overlap in two stages, it is preferable to mount the notched circular packings (7) such that the positions of the notched portions (8) are distributed by 180°, and when the notched circular packings (7) are made to overlap in three stages, it is preferable to mount the notched circular packings (7) such that the positions of the notched portions (8) are distributed by 120°. Due to such a constitution, the sealing property is further ensured. Along with the increase of the number of notched circular packings (7) overlapped to each other, the pressure resistance of the notched circular packings (7) is also increased.

In this manner, the device for mounting a separation membrane element of the present invention has the structure where a compression force in the vertical direction is applied to the notched circular packings (7) made of graphite or the like which are made to overlap in plural stages using the press fitting (20) having the screw structure. Accordingly, the respective notched circular packings (7) made of graphite are deformed so as to be flat in the horizontal direction so that a gap in the separation membrane element mounting portion is filled with the notched circular packings (7) thus ensuring the sealing property.

According to the device for mounting a separation membrane element according to the first embodiment of the present invention, the operability of an operation of mounting the separation membrane element (3) on the tube plate (10) of the separation membrane module (1) by way of the notched circular packings (7) made of graphite which are made to overlap in plural stages or a maintenance operation such as the replacement of the notched circular packings (7) which are mounted on the separation membrane element (3) in plural stages is enhanced. Further, the device exhibits excellent resistance under various use conditions. The device is also advantageous in terms of cost.

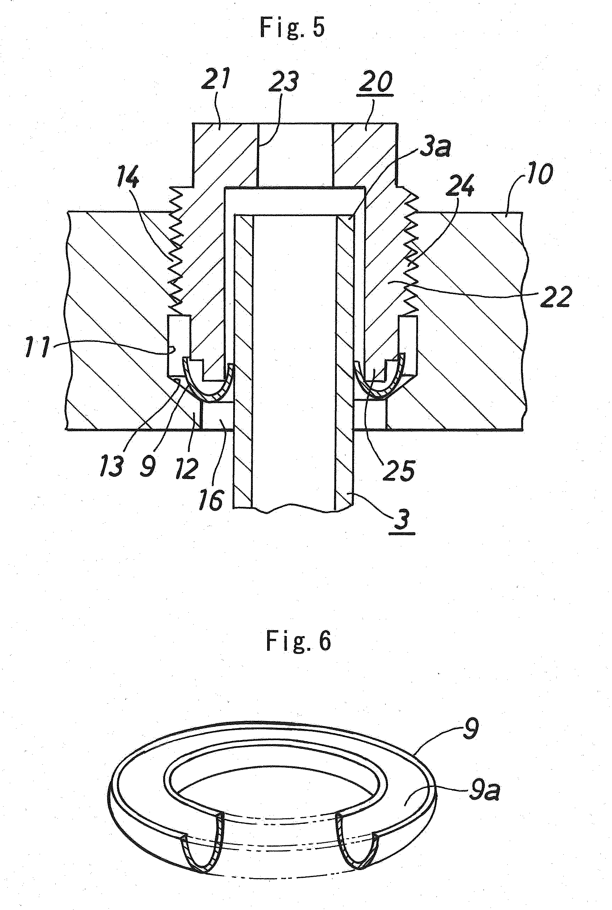

Next, Fig. 5 is an enlarged cross-sectional view showing the second embodiment of a device for mounting a separation membrane element according to the present invention, wherein a state where a ring-shaped packing (9) made of a thin metal plate is mounted on an upper end portion (3a) of a tubular separation membrane element (3) is shown. Fig. 6 is an enlarged perspective view with a part broken away of the ring-shaped packing (9) made of a thin metal plate used in the device for mounting a separation membrane element shown in Fig. 5.

In the second embodiment, a point which makes this embodiment different from the above-mentioned first embodiment lies in a shape of the sealing member which is used in the device for mounting the separation membrane element (3).

That is, the gist of the second embodiment lies in that the sealing member is formed of a ring-shaped packing (9) made of a thin metal plate having a U-shaped transverse cross section which opens upwardly.

A tapered surface (13) which is gradually tapered downward is formed on an annular receiving portion (12) formed on a lower portion of the inner peripheral surface of the mounting hole (11) formed in the tube plate (10) of the separation membrane module (1), a thin-wall distal end portion (25) is formed on a lower end of the cylindrical downwardly extending wall (22) of the press fitting (20), and the thin-wall distal end portion (25) has a thickness which allows the thin-wall distal end portion (25) to be fitted in a gap formed between an inner peripheral surface of the receiving portion (12) below the tapered surface (13) formed on the annular receiving portion (12) and an outer peripheral surface of the upper end portion (3a) of the tubular separation membrane element (3).

The upper end portion (3a) of the separation membrane element (3) is made to pass through the mounting hole (11) formed in the tube plate (10), the ring-shaped packing (9) made of a thin metal plate having a U-shaped transverse cross section is fitted on the outer peripheral surface of the upper end portion (3a) of the separation membrane element (3) in the inside of the mounting hole (11) in a state where an opening portion (9a) of the ring-shaped packing (9) is directed upwardly, and the ring-shaped packing (9) made of a thin metal plate having a U-shaped transverse cross section is received by the inwardly projecting annular receiving portion (12) formed on the lower portion of the inner peripheral surface of the mounting hole (11) formed in the tube plate.

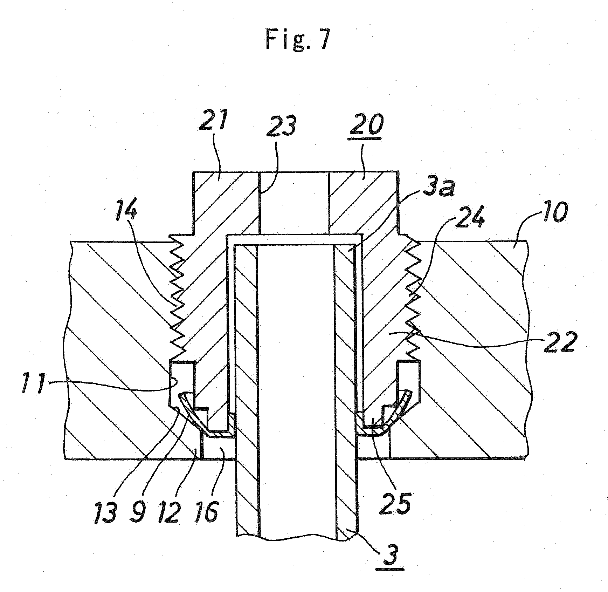

Next, as shown in Fig. 7, the cylindrical downwardly extending wall (22) of the press fitting (20) is fitted in the mounting hole (11) formed in the tube plate (10), the male threaded portion (24) formed on the press fitting (20) is threadedly engaged with the female threaded portion (14) formed on the mounting hole (11), the thin-wall distal end portion (25) formed on the cylindrical downwardly extending wall (22) of the press fitting (20) is fitted in the upwardly opening portion (9a) of the ring-shaped packing (9) having a U-shaped transverse cross section from above, and the ring-shaped packing (9) made of a thin metal plate having a U-shaped transverse cross section is pressed from above by the thin-wall distal end portion (25) so that the ring-shaped packing (9) made of a thin metal plate is deformed in conformity with an outer surface of the thin-wall distal end portion (25) of the press fitting (20) whereby sealing is applied between the tapered surface (13) formed on the annular receiving portion (12) and the inner peripheral surface of the receiving portion (12) below the tapered surface (13) and the outer peripheral surface of the upper end portion (3a) of the tubular separation membrane element (3) by means of the deformed ring-shaped packing (9) made of a thin metal plate and the thin-wall distal end portion (25) of the press fitting (20).

The connecting tube (5) which constitutes a sealing portion of on a tubular membrane element (3) side is made of dense ceramic originally. The dense ceramic exhibits a high Young's modulus compared with Young's modulus of various kinds of metals so that it is necessary to assume that the connecting tube (5) is basically not deformed.

Accordingly, as the device for mounting the separation membrane element (3), it is difficult to estimate sealing by metal fixing in the form of so-called swage lock. In view of the above, even when the sealing member is made of stainless steel having a high Young's modulus, it is desirable that the sealing member has a shape which allows the sealing member to be easily deformed and allows the sealing member to be fitted on a sealing surface by deformation.

In view of the above-mentioned points, the inventors of the present invention have made extensive studies. As a result, in this embodiment, the ring-shaped packing (9) made of a thin stainless steel plate having a wall thickness of 0.1 to 0.5mm, for example, is used as the sealing member which is used in the device for mounting the separation membrane element (3), and the ring-shaped packing (9) has a U-shaped transverse cross section which opens upward (so-called half-moon shape).

The ring-shaped packing (9) made of a thin stainless steel plate having a U-shaped transverse cross section which opens upward is fitted on the outer peripheral surface of the upper end portion (3a) of the separation membrane element (3) in a state where the opening portion (9a) is directed upward, and the ring-shaped packing (9) is received by the inwardly projecting annular receiving portion (12) in the mounting hole (11) formed in the tube plate. On the other hand, a tapered surface (13) which is gradually tapered downward (downward tapered surface) is formed on the annular receiving portion (12). An inner side of an upper surface of the ring-shaped packing (9) made of a thin stainless steel plate is pushed to the downward tapered surface (13) by the thin-wall distal end portion (25) of the press fitting (20) having the threaded structure from above. As a result, the ring-shaped packing (9) made of a thin stainless steel plate having a U-shaped transverse cross section is deformed and hence, an outer surface of the ring-shaped packing (9) is fitted on the tapered surface (13) formed on the annular receiving portion (12) of the tube plate (10), the inner peripheral surface of the receiving portion (12) below the tapered surface (13), and an outer peripheral surface of the upper end portion (3a) of the tubular separation membrane element (3). The sealing is acquired by the above-mentioned structure.

The gist of the present invention according to this embodiment lies in that, with the use of the ring-shaped packing (9) made of a thin stainless steel plate which is used in the device for mounting the separation membrane element (3) of the present invention, even when the ring-shaped packing (9) is made of stainless steel having a high Young's modulus, by decreasing a wall thickness of the ring-shaped packing (9), the ring-shaped packing (9) can be mounted on or removed from the separation membrane element (3) and can surely acquire sealing because of its easy deformation property.

According to the device for mounting a separation membrane element of the second embodiment of the present invention, the operability of an operation of mounting the separation membrane element (3) on the tube plate (10) of the separation membrane module (1) by way of the ring-shaped packing (9) made of a thin stainless steel plate having a U-shaped transverse cross section or a maintenance operation such as the replacement of the ring-shaped packing (9) made of a thin stainless steel plate which is mounted on the separation membrane element (3) is enhanced. Further, the device exhibits excellent resistance against the use under various use conditions. The device is also advantageous in terms of cost.

### Example

Hereinafter, examples of the present invention are explained. However, the present invention is not limited to these examples.

### Example 1

Firstly, it is confirmed that the following steps of an operation of mounting the graphite-made notched circular packings (7) by way of the separation membrane element (3) can be performed easily without difficulties using the device for mounting a separation membrane element of the present invention shown in the above-mentioned Fig. 3 and Fig. 4. In the inside of the mounting hole (11) formed in the tube plate (10) of the separation membrane module (1), two graphite-made notched circular packings (7) are fitted on the outer peripheral surface of the upper end portion (3a) of the separation membrane element (3) in an overlapping manner in two stages, the notched portions (8), (8) of the notched circular packings (7a), (7b) arranged adjacent to each other vertically are arranged at positions different from each other as viewed in a plan view.

Next, actual sealing property of the graphite-made notched circular packings (7) overlapped in two stages is examined as follows. In place of the separation membrane element (3), a columnar rod (not shown in the drawing) having the same diameter as the membrane element connecting tube (5) made of dense ceramic is used. The sealed vessel structure is provided below the tube plate (10), a pressurized state of a pressure of 1.0MPa is created in the sealed vessel by a nitrogen (N₂) gas, and a leakage amount of the nitrogen (N₂) gas is measured by measuring a pressure drop in the sealed vessel whose inner volume is known within a fixed time. As a result, a leakage amount of 0.15mL/min per 1 separation membrane element is measured.

For example, the degree of influence of the leakage of the nitrogen gas exerted in an actual fluid environment when a fluid mixture formed of hydrogen (H₂) and carbon dioxide (CO₂) is separated by the tubular separation membrane element (3) is estimated. Although the lower the permeation performance of the separation membrane element (3), the stricter the evaluation on leak property of the separation membrane element (3) becomes, assuming that the separation membrane element (3) of relatively low permeation performance of 2.0×10⁻⁸mol/(m²·s·Pa) [for example, with respect to the CO₂ separation membrane, a target performance value is approximately 1.0×10^{- 6}mol/(m²·s·Pa)] is used and a raw material gas corresponding to the measured leak amount is leaked to a permeation side, the separation performance is lowered at the level that the separation performance of the separation membrane element (3) is lowered from the separation coefficient of α=250 to the separation coefficient α of approximately 240. Accordingly, lowering of the separation performance is at a level which causes no problem in an actual operation.

"Separation coefficient α with respect to fluid mixture" is, for example, a value calculated using as (CO₂ concentration on permeation side / H₂ concentration on permeation side)/ (CO₂ concentration on supply side / H₂ concentration on supply side) based on gas concentrations on a supply side and a permeation side which are partitioned by a zeolite membrane of the tubular membrane element (3) when a fluid mixture formed of hydrogen (H₂) and carbon dioxide (CO₂) is separated by the tubular separation membrane element (3) or when the fluid mixture formed of hydrogen (H₂) and carbon dioxide (CO₂) is supplied to the inside of the casing (2) and carbon dioxide CO₂ is made to permeate the tubular separation membrane element (3).

### Example 2

Firstly, it is confirmed that the steps of an operation of mounting the separation membrane element (3) on the tube plate (10) of the separation membrane module (1) by way of a stainless-steel thin-plate ring-shaped packing (9) can be performed easily without difficulties using the device for mounting a separation membrane element of the present invention shown in Fig. 5 to Fig. 7.

Next, with respect to actual sealing property of the stainless-steel thin-plate ring-shaped packing (9), a test substantially equal to the test in the example 1 is carried out. As a result of the test, a leak amount of 0.13mL/min is measured per 1 separation membrane element. The influence of a leak amount exerted on the separation coefficient α in an actual fluid environment is also evaluated. The result of the evaluation indicates that the level of the separation performance of the stainless-steel thin plate ring-shaped packing (9) is substantially at the same level as the graphite-made notched circular packings (7) in an overlapping manner in two stages described in the example 1. Accordingly, lowering of the separation performance is at a level which causes no problem in an actual operation.

## Claims

1. A device for mounting a separation membrane element in a separation membrane module (1) where the separation membrane module (1) includes a casing (2) having a tube plate (10), a plurality of tubular separation membrane elements (3) which are mounted on the tube plate (10) in a suspended manner and parallel to each other, and a press fitting (20) for fixing the respective tubular separation membrane elements (3) to the tube plate (10) with a sealing member sandwiched therebetween, a mounting hole (11) is formed in a separation membrane element mounting portion of the tube plate (10) in a penetrating manner, an inwardly projecting annular receiving portion (12) is formed on a lower portion of an inner peripheral surface of the mounting hole (11), a female threaded portion (14) is formed on an upper portion of the inner peripheral surface of the mounting hole (11), the press fitting (20) is constituted of a top wall (21) having a gas passing hole (23) and a cylindrical downwardly extending wall (22) which is contiguously formed with an outer peripheral portion of the top wall (21), and a male threaded portion (24) is formed on an outer peripheral surface of the cylindrical downwardly extending wall (22), wherein
the sealing member is constituted of a plurality of notched circular packings (7) each having a notched circular shape as viewed in a plan view,
an upper end portion (3a) of the separation membrane element (3) is made to pass through the mounting hole (11) formed in the tube plate (10), the plurality of notched circular packings (7) are fitted on an outer peripheral surface of the upper end portion (3a) of the separation membrane element (3) in the inside of the mounting hole (11) in a state where the notched circular packings (7) are made to overlap with each other in plural stages, notched portions (8), (8) of the notched circular packings (7a), (7b) arranged adjacent to each other vertically are arranged at positions different from each other as viewed in a plan view,
the notched circular packings (7) are received by the inwardly projecting annular receiving portion (12) formed on the lower portion of the inner peripheral surface of the mounting hole (11) formed in the tube plate,
the cylindrical downwardly extending wall (22) of the press fitting (20) is fitted in the mounting hole (11) formed in the tube plate (10),
the male threaded portion (24) formed on the press fitting (20) is threadedly engaged with the female threaded portion (14) formed on the mounting hole (11),
the plurality of notched circular packings (7) are pressed to the annular receiving portion (12) formed on the lower portion of the peripheral surface of the mounting hole (11) by a distal end portion of the cylindrical downwardly extending wall (22) of the press fitting (20), and
sealing is applied between the inner peripheral surface of the mounting hole (11) and the outer peripheral surface of the upper end portion (3a) of the separation membrane element (3) by means of the notched circular packings (7).

2. The device for mounting a separation membrane element in a separation membrane module according to claim 1, wherein
the notched circular packing (7) is made of graphite.

3. A device for mounting a separation membrane element in a separation membrane module (1) where the separation membrane module (1) includes a casing (2) having a tube plate (10), a plurality of tubular separation membrane elements (3) which are mounted on the tube plate (10) in a suspended manner and parallel to each other, and a press fitting (20) for fixing the respective tubular separation membrane elements (3) to the tube plate (10) with a sealing member sandwiched therebetween, a mounting hole (11) is formed in a separation membrane element mounting portion of the tube plate (10) in a penetrating manner, an inwardly projecting annular receiving portion (12) is formed on a lower portion of an inner peripheral surface of the mounting hole (11), a female threaded portion (14) is formed on an upper portion of the inner peripheral surface of the mounting hole (11), the press fitting (20) is constituted of a top wall having a gas passing hole and a cylindrical downwardly extending wall (22) which is contiguously formed with an outer peripheral portion of the top wall, and a male threaded portion (24) is formed on an outer peripheral surface of the cylindrical downwardly extending wall (22), wherein
the sealing member is formed of a ring-shaped packing (9) made of a thin metal plate having a U-shaped transverse cross section which opens upward,
a tapered surface (13) which is gradually tapered downward is formed on an annular receiving portion (12) formed on a lower portion of the inner peripheral surface of the mounting hole (11) formed in the tube plate (10),
a thin-wall distal end portion (25) is formed on a lower end of the cylindrical downwardly extending wall (22) of the press fitting (20),
the thin-wall distal end portion (25) has a thickness which allows the thin-wall distal end portion (25) to be fitted in a gap formed between an inner peripheral surface of the receiving portion (12) below the tapered surface (13) formed on the annular receiving portion (12) and an outer peripheral surface of an upper end portion (3a) of the tubular separation membrane element (3),
the upper end portion (3a) of the separation membrane element (3) is made to pass through the mounting hole (11) formed in the tube plate (10), the ring-shaped packing (9) made of a thin metal plate having a U-shaped transverse cross section is fitted on an outer peripheral surface of the upper end portion (3a) of the separation membrane element (3) in the inside of the mounting hole (11) in a state where an opening portion (9a) of the ring-shaped packing (9) is directed upward,
the ring-shaped packing (9) made of a thin metal plate having a U-shaped transverse cross section is received by the inwardly projecting annular receiving portion (12) formed on the lower portion of the inner peripheral surface of the mounting hole (11) formed in the tube plate,
the cylindrical downwardly extending wall (22) of the press fitting (20) is fitted in the mounting hole (11) formed in the tube plate (10),
the male threaded portion (24) formed on the press fitting (20) is threadedly engaged with the female threaded portion (14) formed on the mounting hole (11),
the thin-wall distal end portion (25) formed on the cylindrical downwardly extending wall (22) of the press fitting (20) is fitted in the upwardly opening portion (9a) of the ring-shaped packing (9) having a U-shaped transverse cross section from above, and
the ring-shaped packing (9) made of a thin metal plate having a U-shaped transverse cross section is pressed from above by the thin-wall distal end portion (25) so that the ring-shaped packing (9) made of a thin metal plate is deformed in conformity with an outer surface of the thin-wall distal end portion (25) of the press fitting (20) whereby sealing is applied between the tapered surface (13) formed on the annular receiving portion (12) and the inner peripheral surface of the receiving portion (12) below the tapered surface (13) and the outer peripheral surface of the upper end portion (3a) of the tubular separation membrane element (3) by means of the deformed ring-shaped packing (9) made of a thin metal plate and the thin-wall distal end portion (25) of the press fitting (20).

4. The device for mounting a separation membrane element in a separation membrane module according to claim 3, wherein
the ring-shaped packing (9) made of a thin metal plate having a U-shaped transverse cross section which opens upward is made of stainless steel.
